Europäisches Patentamt

European Patent Office

Office européen des brevets

(19)

(11) Veröffentlichungsnummer: **0 248 415**
**B1**

(12) **EUROPÄISCHE PATENTSCHRIFT**

(45) Veröffentlichungstag der Patentschrift: **23.01.91**

(51) Int. Cl.⁵: **B 60 N 2/48**

(21) Anmeldenummer: **87108020.6**

(22) Anmeldetag: **03.06.87**

(54) **Mechanisch höhenverstellbare Kopfstütze für Kraftfahrzeugsitze.**

(30) Priorität: **03.06.86 DE 3618677**

(43) Veröffentlichungstag der Anmeldung:
**09.12.87 Patentblatt 87/50**

(45) Bekanntmachung des Hinweises auf die
Patenterteilung:
**23.01.91 Patentblatt 91/04**

(84) Benannte Vertragsstaaten:
**AT DE ES FR GB IT SE**

(56) Entgegenhaltungen:
**EP-A-0 174 884**
**DE-A-2 332 610**
**DE-A-3 021 191**
**DE-A-3 141 515**
**DE-A-3 246 766**
**DE-A-3 440 182**

(73) Patentinhaber: **Butz, Eugen Otto**
**Krabbenburg 3**
**D-4010 Hilden (DE)**

(72) Erfinder: **Butz, Eugen Otto**
**Krabbenburg 3**
**D-4010 Hilden (DE)**

(74) Vertreter: **Ostriga, Harald et al**
**Stresemannstrasse 6-8 Postfach 20 13 27**
**D-5600 Wuppertal 2 (DE)**

EP 0 248 415 B1

## Beschreibung

Die Erfindung betrifft eine mechanisch höhenverstellbare Kopfstütze für Kraftfahrzeugsitze, wie sie entsprechend dem Obbegriff des Patentanspruchs 1 durch die DE-A-31 41 515 bekanntgeworden ist.

Entsprechend der DE-A-31 41 515 ist jedes nach unten weisende Tragstangenende außenseitig mit einem Kordelgewinde versehen, welches von einer radial elastisch nachgiebigen drehangetriebenen axial unverschieblich am Sitzkörper gehaltenen Mutter umgriffen ist. Jede Mutter ist außenseitig mit einer Umfangsverzahnung versehen, die mit je einer Gewindeschnecke kämmt. Beide Gewindeschnecken sind drehstarr miteinander gekuppelt, wobei eine Gewindeschnecke unter Zwischenschaltung einer biegsamen Welle über ein seitlich außen an der Sitzlehne angebrachtes Handbetätigungsrad angetrieben ist. Die Tragstangen mitsamt dem an ihnen gehaltenen Polsterträger sind also über einen von der Kopfstütze entfernten, an ergonomisch geeigneter Stelle anzuordnenden Zentralantrieb aufund abbeweglich.

Ausgehend vom Gegenstand der DE-A-31 41 515, liegt der Erfindung die Aufgabe zugrunde, eine über einen Zentralantrieb mechanisch höhenverstellbare Kopfstütze zu schaffen, die insgesamt eine besonders einfache und darüber hinaus kompakte Bauweise gestattet. Diese Aufgabe wurde entsprechend dem Kennzeichenteil des Patentanspruchs 1 gelöst.

Im Unterschied zur vorbekannten Kopfstütze (DE-A-31 41 515), bei welcher die Tragstangen relativ zu Sitzlehne höhenverstellbar sind, sind bei der erfindungsgemäßen Kopfstütze die Tragstangen raumfest — im Bedarfsfalle jedoch lösbar — in der Sitzlehne gehalten. Auf jedem oberen Tragstangenende hingegen ist bei der erfindungsgemäßen Kopfstütze eine Traghülse axial verstellbar gelagert, wobei der Polsterträger vorzugsweise neigbar oder starr an den Traghülsen gehalten ist.

Innenverstellbare Kopfstützen, bei denen die Höhenverstellung des das Kopfpolster tragenden Polsterträgers ausschließlich von Hand erfolgt, sind grundsätzlich bekannt (DE-C-23 32 610). Die Erfindung zeichnet sich nun dadurch aus, daß mit einem verhältnismäßig geringen baulichen Mehraufwand (abgesehen von der Gewindekappe und der biegsamen Welle) lediglich bereits vorhandene Funktionsbauteile umgestaltet werden mußten, um so auf besonders einfache Weise eine zentral mechanisch höhenverstellbare Kopfstütze mit kompakten Verstellmitteln zu schaffen.

Eine Schrägstellung — und mithin eine lästige Verklemmung — wird bei der erfindungsgemäßen Kopfstütze einfach dadurch vermieden, daß die beiden Antriebsenden der beiden biegsamen Wellen bewegungseinheitlich (z.B. getrieblich) miteinander antriebsgekuppelt sind.

Eine zentral mechanisch höhenverstellbare Kopfstütze mit rohrförmigen Tragstangen ist bereits durch die DE-A-32 46 766 an sich bekannt.

Bei dieser vorbekannten Kopfstütze handelt es sich jedoch um keine innenverstellbare Kopfstütze, sondern vielmehr um eine lehnenseitig verstellbare Kopfstütze. Auch nimmt eine in der DE-A-32 46 766 gezeigte Tragstange keine biegsame Welle sondern vielmehr ein rutenartiges drucksteifes Seil auf, welches etwa nach Art einer Zahnstange ausgebildet ist und mit welchem ein im Polsterträger drehgelagertes kopfpolsteraußenseitig über ein Handrad betätigbares Zahnrad kämmt.

Weitere Erfindungsmerkmale ergeben sich aus zusätzlichen Unteransprüchen.

In den Zeichnungen sind bevorzugte Ausführungsbeispiele entsprechend der Erfindung näher dargestellt, es zeigen,

Fig. 1-3 jeweils eine gesonderte Ausführungsform in einem axialen Längsschnitt durch eine Kopfstütze (die Polsterung ist weggelassen) und

Fig. 4 ein für die Ausführungsformen gemäß den Fig. 1-3 gleichermaßen verwendbares zentrales Antriebsteil.

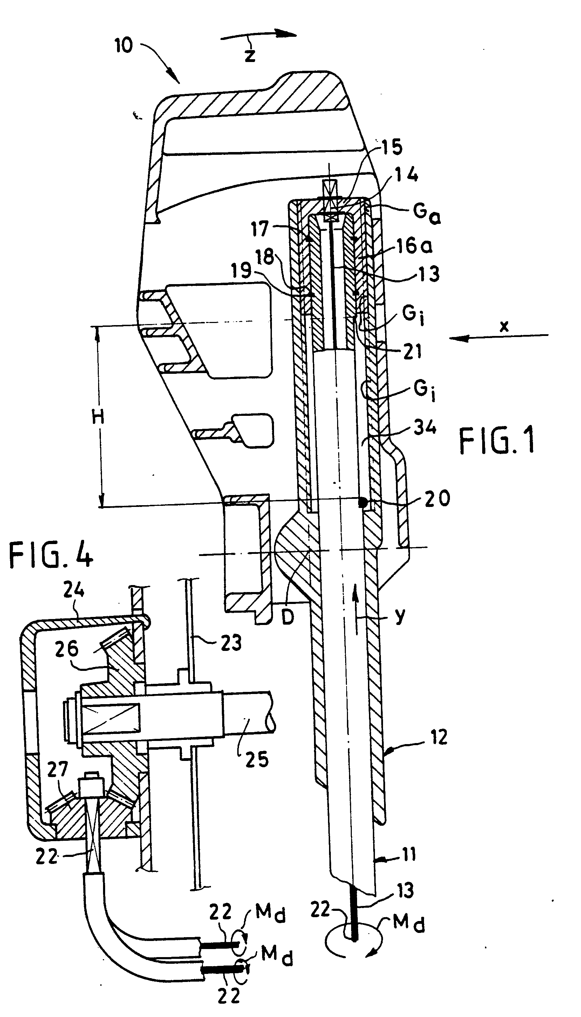

In den Fig. 1-3 ist ein Polsterträger einer Kopfstütze für Kraftfahrzeugsitze jeweils mit der Bezugsziffer 10 bezeichnet. Das den polsterträger umgebende Polster wurde aus Gründen einer Zeichnungsvereinfachung nicht dargestellt.

Sämtliche im weitesten Sinne analogen Funktionsbauteile sind in den Fig. 1-3 mit denselben Bezugsziffern bzw. Bezugsbuchstaben versehen.

Die Kraftfahrzeug-Fahrtrichtung ist in den Zeichnungen mit x gekennzeichnet.

Jeweils zwei kreisrohrförmige Tragstangen 11, von denen in den Fig. 1-3 immer nur eine dargestellt ist, sind in einer nicht gezeigten Sitzlehne raumfest — im Bedarfsfalle jedoch lösbar — einsteckgehalten.

Das Halterungsglied zwischen dem Polstertäger 10 und den Tragstangen 11 ist jeweils von einer Traghülse 12 gebildet, welche entlang der Höhenachse y relativ verstellbar auf der Tragstange 11, diese umschließend, angeordnet ist.

In den Darstellungen gemäß den Fig. 1 bis 3 weist der Polstertäger 10 seine Tiefststellung bezüglich der Tragstangen 11 auf.

Der Polsterträger 10 ist über eine nicht dargestellte, in der Drehachse D angeordnete horizontale Drehlagerzapfen-Anordnung begrenzt neigeverstellbar mit den beiden Traghülsen 12 verbunden.

In den Darstellungen gemäß den Fig. 1 bis 3 haben die Polsterträger 10 eine Neigungsendlage erreicht, so daß nur noch eine Neigeverstellung zurück in Richtung z möglich ist.

In jeder Tragstange 11 ist eine biegsame Welle 13 aufgenommen, deren Abtriebsende mittels eines Vierkantzapfens 14 im Kappenboden 15 einer Gewindekappe 16a, 16b oder 16c gehalten ist.

Gemäß Fig. 1 ist die Gewindekappe 16 a auf den oberen außenseitig glatten Endbereich der Tragstange 11 um die Höhenachse y drehbar gelagert. und über federnde Metallsicherungsringe 17 (z.B. gemäß DIN 472), welche jeweils sowohl in gewindekappenseitige innere Ringnuten 18 als auch in tragstangenseitige Außenringnuten 19 eingreifen, gegen Axialverschiebung gesichert, d.h. auch abzugsgesichert.

Die Gewindekappe 16 a ist mit einem Außengewinde $G_a$ (Spindelteil) versehen, welches mit einem Innengewinde $G_i$ (Mutterteil) an der Innenwandung der Traghülse 12 zusammenwirkt.

Anhand von Fig. 1 ist vorstellbar, daß sich die Traghülse 12 nach oben in Höhenrichtung y bewegt, wenn die biegsame Welle 13 in einer bestimmten Drehrichtung mit einem Drehmoment $M_d$ angetrieben wird und hierbei die mit der Welle 13 drehfest gekuppelte Gewindekappe 16 a in Rotation um die Achse y versetzt.

Um die Höhenbewegung der Traghülse 12 mit Polsterträger 10 in Richtung y zu begrenzen, ist die Traghülse 12 beispielsweise von einem Splint 20 bzw. von einem Schenkel eines Federvorsteckers quer durchsetzt, der sodann zur Höhenbegrenzung innerhalb einer Axialnut 34 gegen eine tragstangenseitige Anschlagschulter 21 anläuft. Der Splint 20 bildet außerdem eine zusätzliche Sicherung gegen ein ungewolltes Abziehen des Polsterträgers 10 in Richtung y. Die Tragstange 11 entsprechend den Fig. 1 bis 3 stellt zweckmäßig ein nahtlos gezogenes Stahlrohr dar, während die Traghülse 12 zweckmäßig aus einem geeigneten Kunststoff besteht, ebenso wie der Polsterträger 10.

Die dargestellten Gewindekappen können zwar grundsätzlich aus einem geeigneten Metall bestehen, bilden jedoch im vorliegenden Falle Spritzgußteile aus einem zäh-festen, zugleich gewisse Lager- bzw. Schmierungseigenschaften aufweisenden Kunststoff (z.B. POM).

Zur Vermeidung eines schrägen Höhenvorschubes sind die beiden Antriebsenden 22 der beiden biegsamen Wellen 13 jeder Kopfstütze bewegungseinheitlich, und zwar getrieblich, miteinander gekuppelt.

Dieses kann beispielsweise gemäß Fig. 4 wie folgt geschehen: an einem Sitzbeschlagteil 23 ist ein Kegelradgetriebe 24 angeordnet. Auf einer zentralen Stellwelle 25 sitzt ein nicht dargestellter Antrieb, beispielsweise in Form eines Handbetätigungsrades. Ebensogut wäre selbstverständlich ein motorischer Antrieb der Stellwelle 25 denkbar. Innerhalb des Getriebes 24 sitzt drehfest auf der Stellwelle 25 ein Tellerrad 26, dessen Verzahnung mit den Verzahnungen zweier identischer Kegelräder 27 kämmt. Jedes Kegelrad 27 (aus Fig. 4 ist nur ein Kegelrad 27 zu ersehen, das andere ist verdeckt), ist mit einem Antriebsende 22 einer biegsamen Welle 13 drehfest gekuppelt, so daß beide Antriebsenden 22 ein Drehmoment $M_d$ gleichen Drehsinns abgeben. Auf diese Weise ist eine Vertikalverstellung beider Traghülsen 12 auf den rotierenden Gewindekappen 16a gewährleistet.

Der maximale Verstellhub der Traghülse 12 relativ zur Tragstange 11 ist in den Zeichnungen mit H bezeichnet.

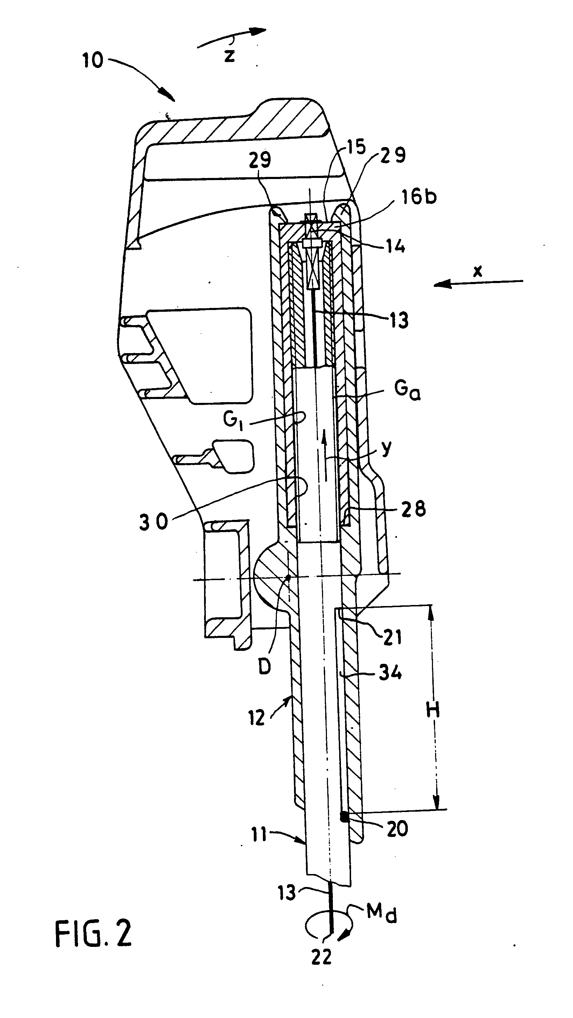

Ebenso wie beim Ausführungsbeispiel gemäß Fig. 1 ist auch beim Ausführungsbeispiel gemäß Fig. 2 die Gewindekappe 16b koaxial zur Höhenachse y der Tragstange 11 angeordnet. Nur sind die geometrischen Relationen bei dem Ausführungsbeispiel gemäß Fig. 2 anders als dem gemäß Fig. 1. Beim Ausführungsbeispiel gemäß Fig. 2 ist nämlich der obere Endbereich einer jeden Tragstange 11 mit dem Außengewinde $G_a$ versehen. Die Gewindekappe 16b weist indes ein Innengewinde $G_i$, welches mit dem Außengewinde $G_a$ in Eingriff steht. Die Drehlagerung der Gewindekappe 16 b ist wie folgt gestaltet: die Traghülse 12 bildet zwischen einer unteren Stützschulter 28 und oberen rastsegmentartigen Stützschultern 29 eine kreiszylindrische Ausnehmung 30. Die Schultern 28, 29 dienen der axialen Lagesicherung der Gewindekappe 16b.

Auch anhand von Fig. 2 ist vorstellbar, daß bei Drehantrieb der biegsamen Welle 13 mit einem Drehmoment $M_d$ und entsprechendem Drehsinn sich die Gewindekappe 16 b in Höhenrichtung y hochschraubt und hierbei ebenfalls die in Mitnahmerichtung gekuppelte Traghülse 12 mitsamt dem von ihr gehaltenen Polsterträger 10 mitnimmt.

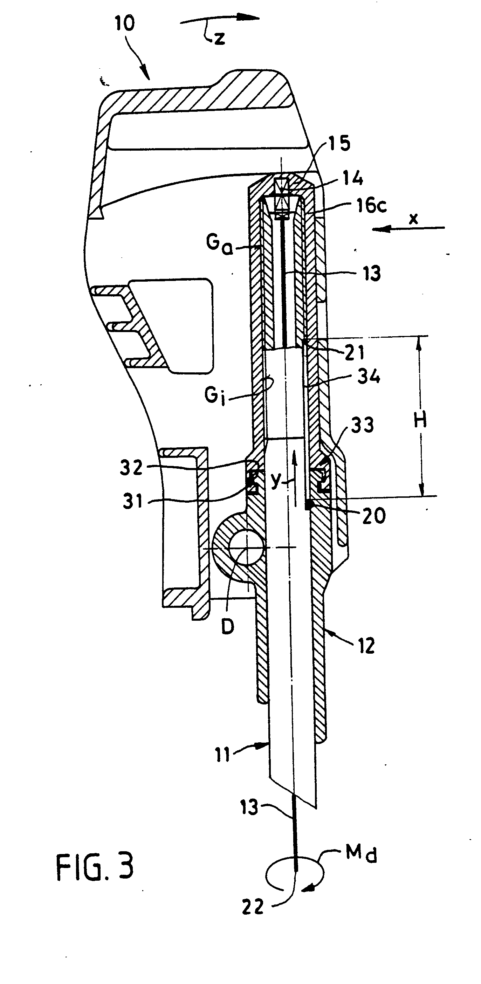

Das Ausführungsbeispiel gemäß Fig. 3 ähnelt grundsätzlich dem in Fig. 2 dargestellten. Mit der Ausnahme jedoch, daß jede Traghülse 12 axial verkürzt ist, d.h. nur einen axial kurzen hinterschnittenen Rastzapfen 33 aufweist, dessen Rastbund 31 unlösbar in einer gewindekappenseitigen Rastnut 32 eingerastet ist. Rastbund 31 und Rastnut 32 bilden zugleich eine rotationssymmetrische, der Höhenrichtung y koaxiale Drehlagerung für die Gewindekappe 16 c.

Auch im Zusammenhang mit Fig. 3 ist vorstellbar, daß die Gewindekappe 16c mit einem über 13 eingeleiteten Drehmoment $M_d$ in mit einem geeigneten Drehsinn in Drehung versetzt werden kann, so daß sich die Gewindekappe 16c mit ihrem Innengewinde $G_i$ in Höhenrichtung y am tragstangenseitigen Außengewinde $G_a$ nach oben schraubt und hierbei über die in Axialrichtung zug- und druckfeste Drehlagerung 31, 32 die Traghülse 12 — und mit dieser den Polsterträger 10 — nach oben verschiebt.

Nur ergänzend sei noch erwähnt, daß die Traghülsen 12 in jedem Falle — allein schon über ihre Neigelagerung bezüglich des Polstertägers 10 — relativ zu den Tragstangen 11 undrehbar gehalten sind.

## Patentansprüche

1. Mechanisch höhenverstellbare Kopfstütze für Kraftfahrzeugsitze, mit einem an zwei sitzlehnenseitigen Tragstangen gehaltenen Polsterträger, zu dessen Höhenverstellung einer jeden. Tragstange ein Gewindetrieb mit zwei relativ zueinander höhenverstellbaren Gewindeteilen — Spindelteil und Mutterteil — zugeordnet ist, wobei das drehangetriebene Gewindeteil des einen Gewindetriebs mit dem drehangetriebenen Gewindeteil des anderen Gewindetriebs bewegungseinheitlich gekuppelt ist und wobei beide Gewindetriebe mittels mindestens einer biegsamen Welle angetrieben sind, dadurch gekennzeichnet, daß auf jeder Tragstange (11), die im wesentlichen raumfest in der Sitzlehne gehalten ist und die einen rohrförmigen Querschnitt aufweist, eine den Polsterträger (10) haltende Traghülse (12) höhenverstellbar angeordnet ist, deren stirnseitig offener oberer Endbereich von einer mit Innen- ($G_i$) oder Außengewinde ($G_a$) versehenen, mit ihrem Kappenboden (15) nach oben weisenden Gewindekappe (16a, 16b, 16c) koaxial umgriffen ist, welche an der Traghülse (12) oder an der Tragstange (11) axial unverschieblich drehgelagert ist, welche bei traghülsenseitiger Drehlagerung (s. Fig. 2 und 3) mit einem an der Tragstange (11) festen Gegengewinde ($G_a$) und welche bei tragstangenseitiger Drehlagerung (Fig. 1) mit einem an der Traghülse (12) festen Gegengewinde ($G_i$) in Eingriff steht, wobei innerhalb jeder Tragstange (11) eine biegsame Antriebswelle (13) aufgenommen ist, deren Abtriebsenden (14) jeweils mit dem zugeordneten Kappenboden (15) drehfest und deren Antriebsenden (22) bewegungseinheitlich miteinander antriebsgekuppelt (s. Fig. 4) sind.

2. Kopfstütze nach Anspruch 1, dadurch gekennzeichnet, daß der obere Endbereich jeder Tragstange (11) mit Außengewinde ($G_a$) versehen und die ein korrespondierendes Innengewinde ($G_i$) aufweisende Gewindekappe (16b) in einer traghülsenseitigen kreiszylindrischen Innenausnehmung (30) aufgenommen und drehgelagert ist, welche zur axialen Lagesicherung der Gewindekappe (16b) ober- und unterseitig mit je mindestens einer die Gewindekappe (16b) über- bzw. untergreifenden Stützschulter (29 bzw. 28) versehen ist (Fig. 2).

3. Kopfstütze nach Anspruch 2, dadurch gekennzeichnet, daß die obere Stützschulter von einer durchgehenden oder unterbrochenen Rastschulter (29) gebildet ist (Fig. 2).

4. Kopfstütze nach Anspruch 1, dadurch gekennzeichnet, daß der obere Endbereich jeder Tragstange (11) mit Außengewinde ($G_a$) versehen und die ein korrespondierendes Innengewinde ($G_i$) aufweisende Gewindekappe (16c) lediglich an ihrem unteren Endbereich — einen traghülsenseitigen Zapfen (33) übergreifend — drehgelagert ist (Fig. 3).

5. Kopfstütze nach Anspruch 1, dadurch gekennzeichnet, daß der untere Bereich (bei 32) der Gewindekappe (16c) den als Rastzapfen (33) ausgebildeten Zapfen unlösbar schnappverrastend (bei 31) übergreift.

6. Kopfstütze nach Anspruch 1, dadurch gekennzeichnet, daß die mit Außengewinde ($G_a$) versehene Gewindekappe (16a) auf einem insbesondere glatten kreiszylindrischen oberen Endbereich der Tragstange (11) drehgelagert und gegen Axialverschiebung gesichert ist, wobei die Traghülse (12) das korrespondierende Innengewinde ($G_i$) aufweist.

7. Kopfstütze nach Anspruch 1 oder nach einem der vorangehenden Ansprüche, dadurch gekennzeichnet, daß mindestens eines der Gewindeteile (bei $G_a$ bzw. $G_i$) ein Kunststoff-Spritzgußteil ist.

8. Kopfstütze nach einem der vorangehenden Ansprüche, insbesondere nach Anspruch 7, dadurch gekennzeichnet, daß Traghülse (12) und Gewindekappe (16a, 16b, 16c) aus Kunststoff bestehen.

9. Kopfstütze nach Anspruch 1 oder einem der vorangehenden Ansprüche, dadurch ekennzeichnet, daß jede Tragstange (11) mit zugehöriger Traghülse (12) die Höhenverstellung zwischen Traghülse (12) und Tragstange (11) begrenzende Anschläge (20, 21) aufweisen.

10. Kopfstütze nach einem der Ansprüche 1 bis 9, dadurch gekennzeichnet, daß zur bewegungseinheitlichen Antriebskupplung der Antriebsenden (22) der beiden biegsamen Wellen (13) ein Rädergetriebe (24) mit einem den Antrieb einleitenden Hauptrad (26) und zwei mit diesem kämmenden einander identischen Abtriebsrädern (27) vorgesehen ist, von denen jedes mit einem Antriebsende (22) einer biegsamen Welle (13) drehfest ist.

**Revendications**

1 Appuie-tête à réglage en hauteur mécanique pour sièges de véhicules automobiles, comprenant un support de rembourrage monté sur deux broches porteuses solidaires du dossier, pour le réglage en hauteur duquel il est prévu, pour chaque broche porteuse, un mécanisme à vis possédant deux éléments filetés réglables en hauteur l'un par rapport à l'autre — la vis et l'écrou — l'élément fileté entraîné en rotation d'un mécanisme à vis étant couplé à l'élément fileté entraîné en rotation appartenant à l'autre mécanisme à vis pour se déplacer avec des mouvements identiques et les deux mécanismes à vis étant entraînés à l'aide d'au moins un arbre flexible, caractérisé par le fait que, sur chaque broche porteuse (11) qui est montée dans le dossier dans une position sensiblement fixe dans l'espace et qui présente une section transversale tubulaire, est montée réglable en hauteur une douille porteuse (12) qui porte le support de rembourrage (10), dont la région terminale supérieyre ouverte en bout est munie coaxialement d'un chapeau fileté (16a, 16b, 16c) muni d'un filetage intérieur ($G_i$) ou d'un filetage extérieyur ($G_a$), et dont le fond (15) est dirigé vers le haut, chapeau qui est monté libre en rotation mais bloqué en translation axiale sur la douille porteuse (12) ou sur la broche porteuse (11), qui, dans le cas du montage rotatif sur la douille porteuse (voir figures 2 et 3), est en prise avec un contre-filetage ($G_a$) solidaire de la broche porteuse (11), tandis que, dans le cas du montage rotatif sur la broche porteuse (figure 1), il est en prise avec un contre-filetage ($G_i$) solidaire de la douille porteuse (12), cependant qu'à l'intérieur de chaque broche porteuse (11), est logé un arbre d'entraînement flexible (13) dont les extrémités de sortie (14) sont couplées solidairement en rotation chacune au fond de chapeau (15) correspondant et dont les extrémités d'entrée (23) sont accouplées cinématiquement l'une à l'autre pour se déplacer avec des mouvements identiques (voir figure 4).

2. Appuie-tête selon la revendication 1, caractérisé par le fait que la région terminale supérieure de chaque broche porteuse (11) est munie d'un filetage extérieur (G$_a$) et le chapeau fileté (16b) présentant un filetage intérieur (G$_I$) correspondant est logé et monté rotatif dans un évidement intérieur cylindrique à base circulaire (30) solidaire de la douille porteuse, évidement qui, pour la fixation de la position axiale du chapeau fileté (16b), est muni en haut et en bas d'au moins un épaulement d'appui (29 ou 28 respectivement) placé au-dessus ou au-dessous du chapeau fileté (16b) (figure 2).

3. Appuie-tête selon la revendication 2, caractérisé par le fait que l'épaulement d'appui supérieur est formé par un épaulement à encliquetage (29) continu ou interrompu (figure 2).

4. Appuie-tête selon la revendication 1, caractérisé par le fait que la région terminale supérieure de chaque broche porteuse (11) est munie d'un filetage extérieur (G$_a$) et le chapeau fileté (16c) qui présente un filetage intérieur correspondant (G$_I$)est monté rotatif, uniquement dans sa région terminale inférieure — en s'emboîtant sur un tourillon (33) solidaire de la broche porteuse (figyre 3).

5. Appuie-tête selon la revendication 1, caractérisé par le fait qye la région inférieure (32) du chapeau fileté (16c) est emboîtée avec encliquetage indémontable (en 31) sur le tourillon (33) qui forme un tourillon à encliquetage (33).

6. Appuie-tête selon la revendication 1, caractérisé par le fait que le chapeau fileté (16a) muni d'un filetage extérieur (G$_a$) est monté rotatif sur une région supérieure cylindrique à base circulaire, notamment lisse, de la broche porteuse (11) et est bloqué en translation axiale, la douille porteuse (12) présentant le filetage intérieur (G$_I$) correspondant.

7. Appuie-tête selon la revendication 1 ou une des revendications précédentes, caractérisé par le fait qu'au moins l'un des éléments filetés (en G$_a$ ou G$_I$) est une pièce en matière plastique moulée par injection.

8. Appuie-tête selon une des revendications précédentes, notamment selon la revendication 7, caractérisé par le fait que la douille porteuse (12) et le chapeau fileté (16a, 16b, 16c) sont en matière plastique.

9. Appuie-tête selon la revendication 1 ou une des revendications précédentes, caractérisé par le fait que chaque broche porteuse (11) et la douille porteuse (12) correspondante présentent des butées (20, 21) qui limitent le déplacement relatif en hauteur entre la douille porteuse (12) et la broche porteuse (11).

10. Appuie-tête selon une des revendications 1 à 9, caractérisé par le fait que, pour assurer l'accouplement cinématique avec mouvements identiques des extrémités d'entrée (22) des deux arbres flexibles (13), il est prévu un mécanisme à engrenages (24) possédant une roue principale (26) qui introduit le mouvement d'entrée et deux roues de sortie identiques (27) qui engrènent avec cette roue d'entrée, dont chacune est solidaire en rotation d'une extrémité d'entrée (22) d'un arbre flexible (13).

## Claims

1. A mechanically, vertically adjustable headrest for motor vehicle seats, having a pad carrier which is held on two support rods on the backrest of the seat and which is vertically adjusted by a threaded drive associated with each support rod and having two threaded parts — spindle part and nut part — vertically adjustable relative to one another, the rotary-driven threaded part of one threaded drive being coupled to the rotary-driven threaded part of the other threaded drive for uniform movement, and the two threaded drives being driven by means of at least one flexible shaft, characterised in that a support sleeve (12) holding the pad carrier (10) is vertically adjustably disposed on each support rod (11) which is held in a substantially spatially fixed manner in the backrest of the seat and which has a tubular cross section, the top end region, open at the end face, of which support sleeve is coaxially embraced by a threaded cap (16a, 16b, 16c) which is provided with an internal thread (G$_I$) or external thread (G$_a$) and whose bottom (15) is directed upwardly and which is axially undisplaceably and rotatably mounted on the support sleeve (12) or on the support rod (11), which, when rotatably mounted on the support sleeve (see Figs. 2 and 3), engages a fixed counter-thread (G$_a$) on the support rod (11) and which, when rotatably mounted on the support rod (Fig. I), engages a fixed counter-thread (G$_I$) on the support sleeve (12), there being accommodated within each support rod (11) respective flexible shafts (13) whose off-drive ends (14) are in each case rigidly connected to the associated cap bottom (15) and whose drive ends (22) are operably interconnected for uniform movement (see Fig. 4).

2. A headrest as claimed in claim 1, characterised in that the top end region of each support rod (11) is provided with an external thread (G$_a$), and the threaded cap (16b) having a corresponding internal thread (G$_I$) is accommodated and rotatably mounted in a circular cylindrical internal recess (30) which is provided in the support sleeve and which, for the purpose of securing the threaded cap (16b) in an axial position, is provided at the top end and bottom end with at least one respective support shoulder (29 and 28) engaging above and below the threaded cap (16b) respectively (Fig. 2).

3. A headrest as claimed in claim 2, characterised in that the top support shoulder is formed by a continuous or interrupted stop shoulder (29) (Fig. 2).

4. A headrest as claimed in claim 1, characterised in that the top end region of each support rod (11) is provided with an external thread (G$_a$), and the threaded cap (16c) having a corresponding internal thread ($G_I$) is rotatably mounted only at its bottom end region and engages over a lug (33) on the support sleeve (Fig. 3).

5. A headrest as claimed in claim 1, characterised in that the bottom region (at 32) of the threaded cap (16c) engages over the lug in the form of a stop lug (33) in an unreleasable snap-locking manner (at 31).

6. A headrest as claimed in claim 1, characterised in that the threaded cap (16a) provided with an external thread ($G_a$) is rotatably mounted on an in particular smooth circular cylindrical top end region of the support rod (11) and is secured against axial displacement, the support sleeve (12) having the corresponding internal thread ($G_I$).

7. A headrest as claimed in claim 1 or in one of the preceding claims, characterised in that at least one of the threaded parts (at $G_a$ or $G_I$) is a plastics injection-moulded part.

8. A headrest as claimed in one of the preceding claims, particularly claim 7, characterised in that the support sleeve (12) and threaded cap (16a, 16b, 16c) are made from plastics material.

9. A headrest as claimed in claim 1 or one of the preceding claims, characterised in that each support rod (11) with associated support sleeve (12) have stops (20, 21) limiting the vertical adjustment between support sleeve (12) and support rod (11).

10. Headrest as claimed in one of the claims 1 to 9, characterised in that a wheel gear (24) is provided for operably coupling the drive ends (22) of the two flexible shafts (13) for uniform movement and has a main wheel (26) initiating the drive and two mutually identical off-drive wheels (27) meshing therewith, each of which off-drive wheels is rigidly connected to a drive end (22) of a flexible shaft (13).

FIG. 1

FIG. 4

FIG. 2

FIG. 3